# EUROPEAN PATENT SPECIFICATION

(11) **EP 3 446 600 B1**
(45) Date of publication and mention of the grant of the patent: **12.08.2020**
(21) Application number: 17187825.9
(22) Date of filing: 24.08.2017
(51) Int. Cl.: A47J 31/18, A47J 31/52, A47J 31/56

(54) **METHOD AND DEVICE FOR BEVERAGE MAKING**
VERFAHREN UND VORRICHTUNG ZUR GETRÄNKEZUBEREITUNG
PROCÉDÉ ET DISPOSITIF DE FABRICATION DE BOISSONS

(43) Date of publication of application: 27.02.2019
(73) Proprietor: Eksen Makine Sanayi ve Ticaret A.S., Gebze/Kocaeli (TR)
(72) Inventor: ÖZGE, Ragip Okan, KOCAELI (TR)
(74) Representative: Sevinç, Erkan

(56) References cited:
- EP-B1- 1 763 311
- WO-A1-2008/148787
- WO-A2-2008/155538

## Description

### Technical Field of the Invention

The present invention relates to a beverage device for making beverage such as a coffee or the like, and more particularly relates to a beverage device having an infrared temperature sensor which sense the temperature of the beverage contactless.

### Background of the Invention

The quality of the beverage depends on a number of factors, including the quality of the coffee or the like, the temperature of the water, and the period of heating time of the beverage that is prepared.

It is necessary to constantly control the cooking process of beverages such as a Turkish coffee or milk that tend to overflow during cooking. For example, when making the Turkish coffee, a significant amount of froth is produced when it is close to the boiling point and the froth is increased instantaneously and sharply. The rising of the froth has to be controlled and the heating process has to be finished before boiling phase. In the state of art, a cooking pot is taken to a predetermined temperature by means of heating means and when the desired froth level is reached and the cooking process is over. Even though the energy transmitted to the heating means is turned off immediately in order to stop heat transmission, the heat transmission to the cooking pot continues due to the thermal inertia of the heating means, thus the beverage reaches boiling point by being over heated than the required level and the desired flavor of the beverage cannot be obtained. One of the main problems is that preventing an overflow of the ingredients in the end of the heating process. This is typically achieved by regulating the heat energy transferred to the cooking pot, i.e. by reducing power consumption of the heating means.

In some devices, an automatic detection of the froth formation of the beverage is controlled by measuring the steam temperature with NTC thermistors which are non-linear resistors, and which alter their resistance characteristics with temperature. However, in such devices, ambient temperature and the amount of the cooked beverage change the amount of heat, which makes it difficult to sense the correct temperature value accurately.

Further, in some devices, automatic froth detection is controlled with a sensor that detects the light intensity. However, in a similar manner, a problem of such devices is that it is needed that the formation of the froth and rise in the level of the froth. Such device does not measure the beverage temperature precisely, but works with respect to the formation of the froth. This may result in problems such as overheating when the froth is not formed.

A prior art publication in the technical field of the present invention may be referred to as EP1763311 (B1) among others, the document disclosing a coffee machine having an infrared sensor is set to detect the initial level of the mixture, which is composed in order to make Turkish coffee in a boiling pot in amounts according to the cup size and cup quantity wherein Turkish coffee is to be served, and the froth height limit that every mixture at an initial level will reach after the boiling process. However, a problem of such devices is that, likewise, it is needed that the formation of the froth and rise in the level of the froth. Further, in such devices where this method is used, the heat that accumulates on the resistance leads to excessive overflow. For this reason it is necessary to use the systems that will separate the cooking pot with the heating means after a certain level.

In the market, most of the device use similar type resistances that are used because of economic and technical parameters in which the thermal inertia accumulates on the resistance causes various problems to be solved.

### Objects of the Invention

The present invention is based on the general idea of providing a temperature sensing device comprising at least one infrared sensor, by means of which the liquid temperature in the cooking pot can be sensed accurately, in a device for household appliance, in particular for further use in an automated Turkish coffee preparation machine.

Primary object of the present invention is to provide a beverage device for making beverages with a sensor by means of which the beverage temperature can be sensed accurately.

Another object of the present invention is to provide a beverage device for detecting the froth accurately. Cooking time is determined by predicting the heat mass that accumulates on the heating element.

Another object of the present invention is to provide a beverage device which is adapted to control heat input during the coffee cooking period which ensures that the desired flavor is obtained.

Another object of the present invention is to provide a beverage device which prevents the extra heat input, which can lead to excessive foaming, and every time the cooked quality foams are obtained.

Another object of the present invention is to provide a beverage device which provides a homogeneous mixing in the cooking pot by mixing the ingredients in the cooking pot through a water jet.

### Summary of the Invention

The present invention proposes a beverage device for making a beverage, particularly a coffee-based beverage, comprising: an electronic control unit; a portable cooking pot having a bottom and an open top for receiving a mixture that is added to the cooking pot to make the beverage, in which a cooking process is performed; a heating means for heating the cooking pot during the cooking process; and an infrared temperature sensor for contactless sensing the temperature in the cooking pot. Said infrared temperature sensor is configured to detect the temperature of an upper surface of the mixture during the cooking process and said infrared temperature sensor is disposed in proximity to the cooking pot, at a distance such as to allow the measurement of the temperature of the upper surface of the mixture contactless wherein said electronic control unit reduces or cuts off power transferred to said heating means when a predefined temperature value is reached based on the temperature value obtained from the infrared temperature sensor.

In an alternative embodiment, said electronic control unit is configured to pause the cooking process by cutting off or reducing the energy transmission to the cooking pot when the mixture reaches a predetermined temperature wherein the cooking pot is maintained from 30 to 60 °C for a period of time selected between 5 to 30 seconds. In another embodiment, the cooking pot can be maintained from 30 to 100 °C for a period of time predefined according to the type of the prepared mixture.

In an alternative embodiment, said device comprises a water reservoir for storing water and a pump which is adapted to transfer the water in the water reservoir to the cooking pot.

In an alternative embodiment, said beverage device comprises at least one spraying head, which enables the mixing of the mixture in the cooking pot by means of water jet.

In an alternative embodiment, said spraying head comprises at least one spray opening through which the water jet passes wherein said at least one spray opening is configured to spray the water to the mixture at an angle (α) between 10 and 60 degrees relative to a longitudinal axis of the device before or during the cooking process.

In an alternative embodiment, said beverage device comprises a temperature sensor which is arranged to measure and control the temperature of the bottom surface of the heating means thereby overheating of the heating means is eliminated.

In an alternative embodiment, said beverage device comprises a stirrer which is suitable to be positioned in the cooking pot, and a drive means configured to actuate the stirrer wherein said drive means and the stirrer are configured in such a way that the stirrer is driven in order to mix the mixture in the cooking pot, through a magnetic drive effect.

In an alternative embodiment, the electronic control unit is configured in such a way as to actuate the said drive means, and therefore magnetically drive said stirrer at a speed to mix the mixture during the cooking process or before the cooking process in a specified period of time.

In an alternative embodiment, said drive means comprises a drive portion in a magnetic communication with the stirrer and a motor which is electrically powered, a spindle of the motor rotation drives the drive portion and this creates a rotary local magnetic field, collaborating with an embedded upper magnet of the stirrer and embedded lower magnet of the drive portion and this as a result causes the stirrer to rotate.

In an alternative embodiment, said beverage device comprises a switch which is configured to detect the placement of the cooking pot in the device before the cooking process is started.

In an alternative embodiment, said beverage device comprises a raising means which allows the heating means to be lifted in such a way as to contact the cooking pot to increase the thermal efficiency during the cooking process wherein said raising means actuates the heating means in downwards direction when the cooking process is completed.

In an alternative embodiment, the raising means comprises a mechanic arm in a communication with a motor which provides the contact of the heating means to the bottom of the boiling pot by a certain pressure force by moving in the upwards direction during the cooking process.

In an alternative embodiment, the electronic control circuit has a temperature algorithm that calculates the inner temperature value of the mixture and when the mixture will boil during the cooking process with respect to the temperature of the upper surface of the mixture that is sensed by the infrared temperature sensor, wherein the temperature algorithm calculates the inner temperature of the mixture depends on the type of the beverage to be prepared and the type of the heating means.

In an alternative embodiment, said an infrared temperature sensor is disposed in the cooking pot for contactless sensing the temperature in the cooking pot and said heating means is disposed on a bottom portion of the cooking pot wherein said cooking pot is placed onto a stand during the cooking process.

A beverage, particularly a coffee-based beverage, preparation method for a beverage device comprises a step of adding ingredients of the mixture to the cooking pot to make the beverage; a step of placing the cooking pot in the beverage device; a step of actuating the device; a step of actuating the cooking process by transmitting energy to the heating means; a step of measuring the temperature of the upper surface of the mixture in the cooking pot by means of the infrared temperature sensor contactless; a step of terminating the cooking process by cutting off the energy transmitted from the heating means to the cooking pot when a predefined temperature value is reached based on the temperature data obtained from the infrared temperature sensor. Said method further comprises: a step during which the temperature between 30 and 100°C is maintained for a period of time depending on type of the beverage to be prepared; and a step of terminating the cooking process by cutting off the energy transmitted from the heating means to the cooking pot before the temperature of the mixture exceeds 100°C.

### Brief Description of the Figures

Accompanying drawings are given solely for the purpose of exemplifying a beverage device for beverage making whose advantages over prior art were outlined above and will be explained in detail hereinafter:
Fig. 1 demonstrates a front view of the beverage device according to the present invention;
Fig. 2 demonstrates a perspective view of the beverage device according to the present invention;
Fig. 3 demonstrates a side view of the beverage device according to the present invention;
Fig. 4 demonstrates a front view of another embodiment of the beverage device according to the present invention;
Fig. 5 shows a view in section on A-A of the Figure 4 wherein a raising means is shown.
Fig. 6 shows a cross sectional view according to another embodiment of the beverage device.
Fig. 7 shows a cross sectional view according to another embodiment of the beverage device.
Fig. 8 shows a cross sectional view according to another embodiment of the beverage device having a stand on which the cooking pot is placed.

### Detailed Description of the Invention

### Reference list

- 10.: Beverage device
- 15.: Main body
- 20.: Cooking pot
- 21.: Mixture
- 22.: Handle
- 23.: Upper surface
- 30.: Water reservoir
- 31.: Water
- 32.: Pump
- 40.: Motor
- 41.: Drive means
- 42.: Heating means
- 43.: Drive portion
- 43a.: Lower magnet
- 44.: Stirrer
- 44a.: Upper magnet
- 50.: Infrared temperature sensor
- 60.: Spraying head
- 61.: Water jet
- 70.: Raising means
- 80.: Base portion

According to the present invention a beverage device (10) for making a beverage, particularly a coffee-based beverage, is proposed. Said beverage device (10) mainly comprises an electronic control unit; a portable cooking pot (20) having a bottom and an open top for receiving a mixture (21) that is added to the cooking pot (20) to make the beverage, in which a cooking process is performed; a heating means (42) for heating the cooking pot (20) during the cooking process; and an infrared temperature sensor (50) for contactless sensing the temperature in the cooking pot (20). According to the invention, said infrared temperature sensor (50) is configured to detect the temperature of an upper surface (23) of the mixture (21) during the cooking process and said infrared temperature sensor (50) is disposed in proximity to the cooking pot, at a distance such as to allow the measurement of the temperature of the upper surface (23) of the mixture (21) contactless wherein said electronic control unit reduces or cuts off power transferred to said heating means (42) when a predefined temperature value is reached based on the temperature value obtained from the infrared temperature sensor (50). A thermopile sensor can be used as an infrared temperature sensor (50) that converts thermal energy into electrical energy. Said thermopile sensor can be composed of several thermocouples connected usually in series or, less commonly, in parallel. The thermocouples operate by measuring the temperature differential from their junction point to the point in which the thermocouple output voltage is measured. Thermocouples can be connected in series as thermocouple pairs with a junction located on either side of a thermal resistance layer. In particular, the infrared temperature sensor (50) can detect the wavelength of the radiation captured and from this it is possible to obtain the temperature. The electronic control unit is adapted to manage the various components of the beverage device (10) and in particular to control the heating means (42), pump (32), the drive means (41) and related stirrer (44).

According to the present invention, the temperature of the mixture (21) in the cooking pot (20) is controlled by the infrared temperature sensor (50) which can contactless sense the temperature of the upper surface (23) of the mixture (21) without interference during the cooking process. When the upper surface (23) temperature of the mixture (21) reaches a desired value, the cooking process is automatically terminated, reduced or paused by means of the electronic control unit through heating means (42).

The infrared temperature sensor (50) determines to initiate the boiling process by detecting the temperature of the mixture (21) having ingredients such as water, coffee or the like and sugar. Said mixture (21) is added to the cooking pot (20) in defined quantities and said infrared temperature sensor (50) is adapted to conclude the cooking process by sensing the upper surface (23) of the mixture (21) when the heating process is concluded. The upper surface (23) of the coffee-based or the like mixture (21) does not behave like water. A residue accumulates on the surface of the mixture (21), which shields the temperature of the mixture (21) at the bottom of the cooking pot (20). As the mixture (21) reaches the cooking level, the upper surface (23) temperature gradually heats up and when the mixture (21) reaches the desired cooking level, and the mixture (21) begins to boil and froth starts to form. When the upper surface (23) temperature reaches to the temperatures before the boiling temperature, i.e., between 70 - 95° C, the energy transmitted from the heating means (42) to the cooking pot (20) is cut off, reduced or paused. Said cooking pot (20) is preferably used with a handle (22) for holding by the user as shown in the figures.

As the cooking time of the mixture (21) is increased, the mixture (i.e. the coffee, milk-based beverage or Turkish coffee) dissolves more in water, changing the flavor. The taste perception varies according to the person and the habits. When the upper surface temperature of the coffee-based mixture (21) reaches the predetermined temperature (i.e., 30-60 °C or 30-100 °C) before the initial boiling, the cooking process is interrupted and the mixture is kept at the determined temperature values or times (i.e., 5 Sec-20 Sec) and then the cooking process is continued. In this way the desired flavor can be reached. The preset values can be used on the beverage device (10) as an option for the user taste selection.

As a result of the tests and analyzes, it is discovered that the upper surface of the mixture temperature, and the inner portion of the mixture temperature are very different compared to each other. According to the present invention, said electronic control unit has a temperature algorithm that calculates the temperature values from the upper surface of the mixture that is sensed by the infrared sensor and the temperature at which the temperature of the inner portion of the mixture is at what level and when it will bring to the boiling point. For example: depending on the type of the heating means, a 5 °C temperature change in the upper surface can be equivalent to a 30 degree temperature change in the liquid-based mixture inside. With the developed temperature algorithm, Turkish coffee or the like can be prepared at the desired level by just calculating the temperature values in the upper surface (23).

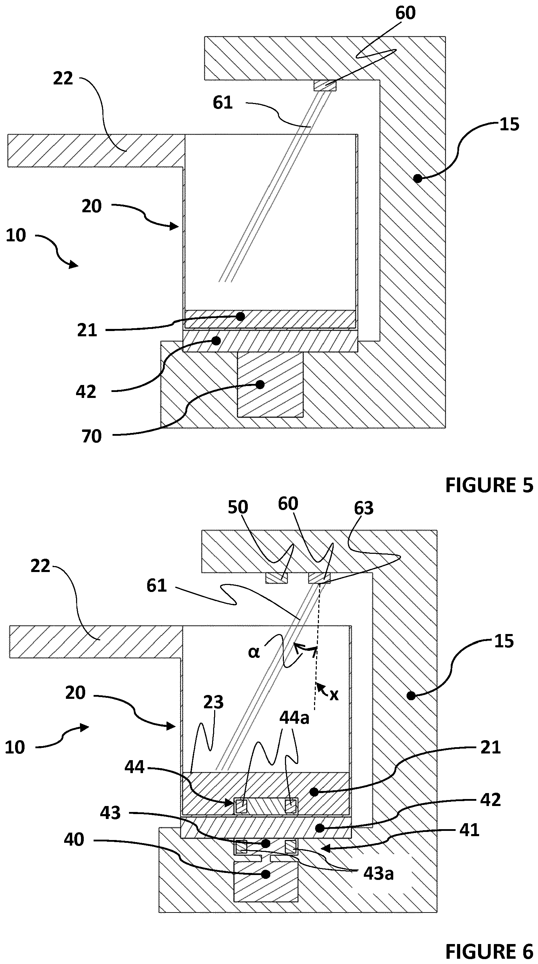

Referring to the Fig. 6, in a possible embodiment of the present invention, a water reservoir (30) for storing water and a pump (32) can be adapted to transfer the water (31) in the water reservoir (30) to the cooking pot (20). Said reservoir (30) can be attached to the main body of the beverage device (10) and removed from the main body (15). Further, the water level in the water reservoir (30) can be controlled by a water level sensor. If the quantity of water in the reservoir (30) is below a predetermined level, a vocal and/or visual warning is given and the cooking process cannot be actuated.

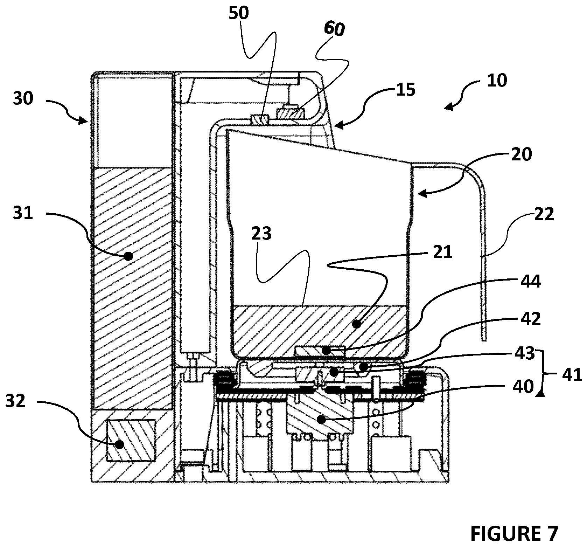

In a possible embodiment of the present invention, the beverage device (10) can have at least one spraying head (60) which enables the mixing of the mixture (21) in the cooking pot (20) by means of water jet (61). Said at least one spraying head (60) can be positioned at the upper portion of the main body (15) facing to the cooking pot (20). The spraying head (60) can have at least one spray opening (63) through which the water jet passes wherein said at least one spray opening (63) is configured to spray the water to the mixture at an angle (α) between 10 and 60 degrees relative to a longitudinal axis (X) of the beverage device (10) before or during the cooking process. The water jet sprays at a certain angle to the cooking pot (20), so that a more homogeneous mixture is obtained. Further, the spray openings (63) can be positioned at different angles and positions. The required amount of coffee, water and sugar as desired can be mixed homogeneously prior cooking or boiling by means of the water ejected through the spray opening (63). The beverage device (10) is very easy to use and clean as the cooking pot (20) is not integrated with the main body (15) and with the heating means like the resistance (as shown in Fig. 7) and can be easily attached and removed.

In a possible embodiment of the present invention, the temperature of the bottom of the heating means (42) can be measured by a temperature sensor that can be added to limit and control the heating means (42). The temperature sensor is arranged to measure and control the temperature of the bottom surface of the heating means (42) thereby overheating of the heating means (42) can be eliminated. This sensor can be any sensor that can measure temperature by contact or contact.

Again referring to the Fig. 6 and 7, a stirrer (44) and a drive means for actuating the stirrer can be used in an alternative embodiments of the present invention. Said stirrer is suitable to be positioned in the cooking pot (20) before the cooking process is started. The drive means (41) are configured to actuate the stirrer (44) wherein said drive means (41) and the stirrer (44) are configured in such a way that the stirrer (44) is driven in order to mix the mixture in the cooking pot (20), through a magnetic drive effect. The electronic control unit is configured in such a way as to actuate the said drive means (41), and therefore magnetic drive said stirrer (44) at a speed to mix the mixture (21) during the cooking process or before the cooking process during a specified period of time. Further, the drive means (41) can have a drive portion (43) in a magnetic communication with the stirrer (44) and a motor (40) which is electrically powered, a spindle of the motor (40) rotationally drives the drive portion (43) and this creates a rotary local magnetic field, collaborating with an embedded upper magnet (44a) of the stirrer (44) and embedded lower magnet (43a) of the drive portion (43) and this as a result causes the stirrer to rotate. The drive means can be fixed to the lower portion of the main body (15) of the device (10). Further, a positioning element can be used for positioning the stirrer during the use that ensures the stirrer is correctly in place locally in the magnetic field. Such position element helps to prevent the stirrer from leaving the field before, during or after the stirring operation. In some embodiments, the cooking pot (20) can be produced with the positioning element in which stirrer (44) just placed into the cooking pot (20). The stirrer can have at least one upper magnet (44a) made of ferromagnetic material such as a pair of magnets which are housed in a plastic support which may be injection-molded around the magnets.

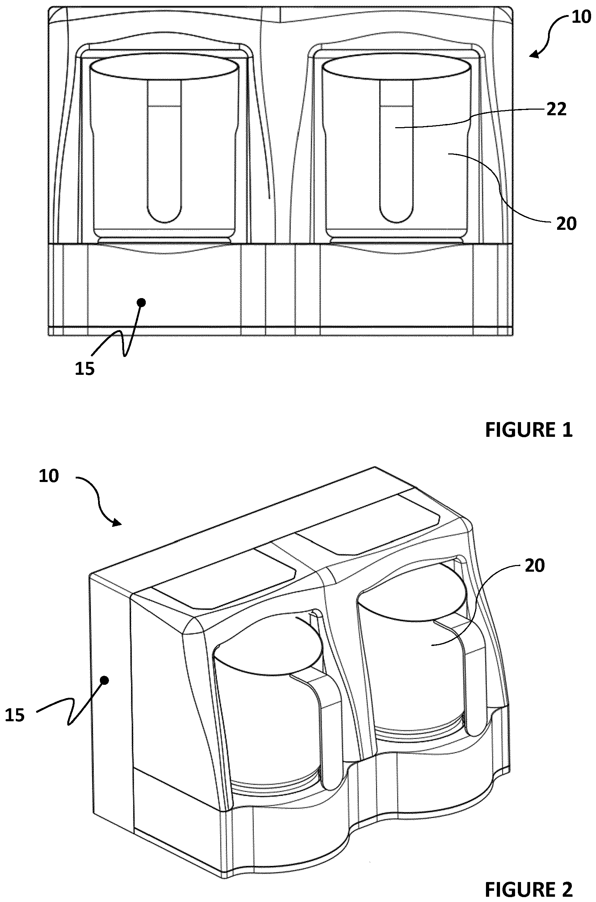

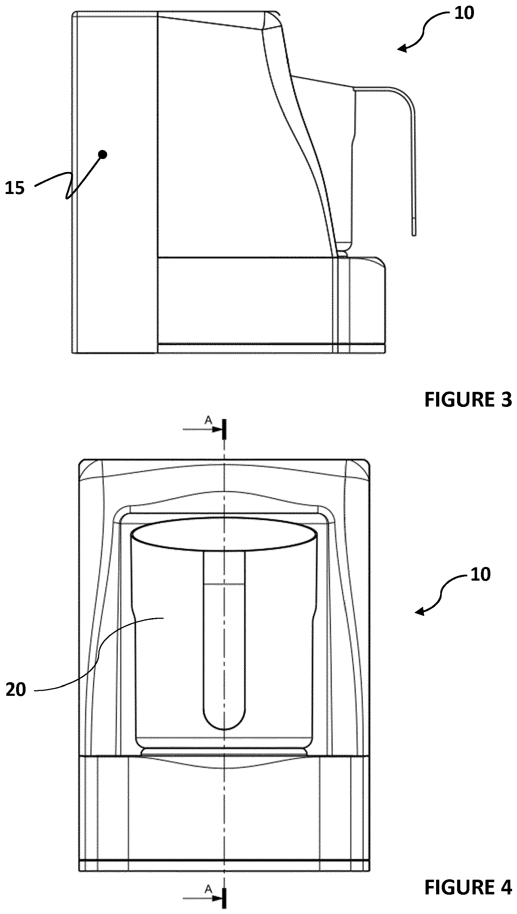

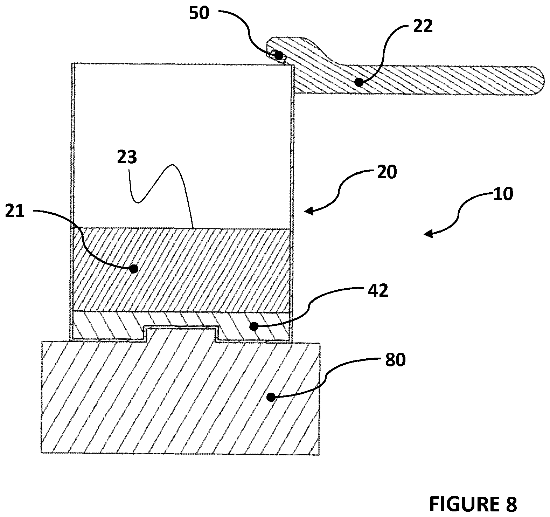

Referring to the Fig 1-7, the beverage device (10) has a main body (15) into which a portable cooking pot (20) is placeable. In a possible embodiment of the present invention, the beverage device (10) can be designed as a single unit which can be placeable onto a base portion (80) having an electrical connector which is in a communication with the cooking pot (20) during the cooking process, as shown in Fig. 8. Referring to the Fig. 8, the cooking pot (20) can include heating means (42) at the bottom portion thereof into which the mixture (21) is added. Again referring to the Fig. 8, said infrared temperature sensor (50) is configured to detect the temperature of an upper surface (23) of the mixture (21) during the cooking process and said infrared temperature sensor (50) is disposed in proximity to the cooking pot, at a distance such as to allow the measurement of the temperature of the upper surface (23) of the mixture (21) contactless. Said infrared temperature sensor (50) can be provided at one end of a handle (22) of the cooking pot (20) facing to the inner portion of the cooking pot with a certain angle, or can be provided at an inner rim of the cooking pot (20).

Said beverage device (10) can be provided with a button adapted to control the electricity powering of the electronic control unit and the heating means (42). An indicator light can be adapted to indicate the electrical powering derived from the button, an indicator light can be adapted to indicate the reaching of a predetermined temperature in the heating means measured by means of the infrared temperature sensor (50), and another light indicator can be adapted to indicate that the water (31) in the water reservoir (30) is under a certain level.

In a possible embodiment of the present invention, the cooking pot (20) or the heating means (42) can be lifted mechanically or electromechanically in an upwards direction during the cooking process or the after of the cooking process is done. The beverage device (10) can have lifting means which is arranged to lift the cooking pot during the cooking process. In another embodiment of the present invention, the beverage device (10) can have a raising means (70) which allows the heating means (42) to be lifted in such a way as to contact the cooking pot (20) to increase the thermal efficiency during the cooking process wherein said raising means (70) actuates the heating means (42) in downwards direction when the cooking process is completed. The raising means (70) comprise a mechanical arm in a communication with a motor which provides the contact of the heating means (42) with the bottom of the boiling pot (20) by a certain pressure force by moving in the upwards direction during the cooking process. In a possible embodiment, when the infrared temperature sensor (8) detects predefined temperature is reached, the electronic control unit lowers the heating means and cuts the connection with the cooking pot (20).

A beverage is prepared in the beverage device (10) by using a method comprises the following steps:
ingredients of the mixture (21) are added to the cooking pot (20) to make the beverage;
the cooking pot (20) in the beverage device (10) is placed;
the device (10) is actuated;
water is sprayed into the cooking pot (20);
the cooking process is actuated by transmitting energy to the heating means (42);
the temperature of the upper surface (23) of the mixture (21) in the cooking pot (20) is measured by means of the infrared temperature sensor (50) contactless;
the cooking process is terminated by cutting off the energy transmitted from the heating means (42) to the cooking pot (20) when a predefined temperature value is reached based on the temperature data obtained from the infrared temperature sensor (50).

Said beverage preparation method further comprises the following steps
the temperature between 30 and 100°C is maintained for a period of time depending on the type of the beverage to be prepared; and
the cooking process is terminated by cutting off or reducing the energy transmitted from the heating means (42) to the cooking pot (20) before the temperature of the mixture (21) exceeds 100°C.

According to the present invention, the beverage device (10) can be used for the preparation of Turkish coffee, coffee, soup or milk-based beverages.

## Claims

1. A beverage device (10) for making a beverage, particularly a coffee-based beverage, comprising:
an electronic control unit;
a portable cooking pot (20) having a bottom and an open top for receiving a mixture (21) that is added to the cooking pot (20) to make the beverage, in which a cooking process is performed;
a heating means (42) for heating the cooking pot (20) during the cooking process; and
an infrared temperature sensor (50) for contactless sensing the temperature in the cooking pot (20);
**characterized in that** said infrared temperature sensor (50) is configured to detect the temperature of an upper surface (23) of the mixture (21) during the cooking process and said infrared temperature sensor (50) is disposed in proximity to the cooking pot at a distance such as to allow the measurement of the temperature of the upper surface (23) of the mixture (21) contactless **wherein** said electronic control unit reduces or cuts off power transferred to said heating means (42) when a predefined temperature value is reached based on the temperature value obtained from the infrared temperature sensor (50).

2. A beverage device (10) as set forth in Claim 1, wherein said electronic circuit is configured to pause the cooking process by cutting off or reducing the energy transmission to the cooking pot (20) when the mixture (21) reaches a predetermined temperature wherein the cooking pot (20) is maintained from 30 to 100 °C for a predefined period of time.

3. A beverage device (10) as set forth any one of the preceding Claims, wherein said device comprises a water reservoir (30) for storing water and a pump (32) which is adapted to transfer the water (31) in the water reservoir (30) to the cooking pot (20).

4. A beverage device (10) as set forth any one of the preceding Claims, wherein said beverage device (10) comprises at least one spraying head (60) which enables the mixing of the mixture (21) in the cooking pot (20) by means of water jet (61).

5. A beverage device (10) as set forth in Claim 4, wherein said spraying head (60) comprises at least one spray opening (63) through which the water jet passes wherein said at least one spray opening (63) is configured to spray the water to the mixture at an angle (α) between 10 and 60 degrees relative to a longitudinal axis (X) of the device (10) before or during the cooking process.

6. A beverage device (10) as set forth any one of the preceding Claims, wherein said beverage device (10) comprises a temperature sensor which is arranged to measure and control the temperature of the bottom surface of the heating means (42) thereby overheating of the heating means (42) is eliminated.

7. A beverage device (10) as set forth any one of the preceding Claims, wherein said beverage device (10) comprises a stirrer (44) which is suitable to be positioned in the cooking pot (20), and a drive means (41) configured to actuate the stirrer (44) wherein said drive means (41) and the stirrer (44) are configured in such a way that the stirrer (44) is driven in order to mix the mixture in the cooking pot (20), through a magnetic drive effect.

8. A beverage device (10) as set forth in Claim 7, wherein the electronic control unit is configured in such a way as to actuate the said drive means (41), and therefore magnetically drive said stirrer (44) at a speed to mix the mixture (21) during the cooking process or before the cooking process in a specified period of time.

9. A beverage device (10) as set forth in Claim 7 or 8, wherein said drive means (41) comprises a drive portion (43) in a magnetic communication with the stirrer (44) and a motor (40) which is electrically powered, a spindle of the motor (40) rotationally drives the drive portion (43) and this creates a rotary local magnetic field, collaborating with an embedded upper magnet (44a) of the stirrer (44) and embedded lower magnet (43a) of the drive portion (43) and this as a result causes the stirrer to rotate.

10. A beverage device (10) as set forth any one of the preceding Claims wherein, said beverage device (10) comprises a switch which is configured to detect the placement of the cooking pot (20) in the device before the cooking process is started.

11. A beverage device (10) as set forth any one of the preceding Claims, wherein said beverage device (10) comprises a raising means (70) which allows the heating means (42) to be lifted in such a way as to contact the cooking pot (20) to increase the thermal efficiency during the cooking process wherein said raising means (70) actuates the heating means (42) in downwards direction when the cooking process is completed.

12. A beverage device (10) as set forth any one of the Claim 1 to 11, wherein the electronic control circuit has a temperature algorithm that calculates inner temperature value of the mixture (12) and when the mixture (12) will boil during the cooking process with respect to the temperature of the upper surface (23) of the mixture (12) that is sensed by the infrared temperature sensor (50) wherein the temperature algorithm calculates the inner temperature of the mixture (21) depends on the type of the beverage to be prepared and the type of the heating means (42).

13. A beverage device (10) as set forth any one of the Claim 1 to 10, wherein said an infrared temperature sensor (50) is disposed in the cooking pot (20) for contactless sensing the temperature in the cooking pot (20) and said heating means (42) is disposed on a bottom portion of the cooking pot (20) wherein said cooking pot (20) is placed onto a stand (80) during the cooking process.

14. A beverage, particularly a coffee-based beverage, preparation method for a beverage device (10) as defined in preceding Claims, comprising:
a step of adding ingredients of the mixture to the cooking pot (20) to make the beverage;
a step of placing the cooking pot (20) in the beverage device (10);
a step of actuating the device (10);
a step of spraying water into the cooking pot (20);
a step of actuating the cooking process by transmitting energy to the heating means (42);
a step of measuring the temperature of the upper surface (23) of the mixture (21) in the cooking pot (20) by means of the infrared temperature sensor (50) contactless;
a step of terminating the cooking process by cutting off the energy transmitted from the heating means (42) to the cooking pot (20) when a predefined temperature value is reached based on the temperature data obtained from the infrared temperature sensor (50).

15. A method as set forth in Claim 14, further comprising:
a step during which the temperature between 30 and 100°C is maintained for a period of time depending on the type of the beverage to be prepared; and
a step of terminating the cooking process by cutting off the energy transmitted from the heating means (42) to the cooking pot (20) before the temperature of the mixture (21) exceeds 100°C.

## Patentansprüche

1. Getränkevorrichtung (10) zur Zubereitung eines Getränks, insbesondere eines Getränks auf der Basis von Kaffee, aufweisend:
eine elektronische Steuereinheit;
ein tragbares Kochgefäß (20) mit einem Boden und einer oberen Öffnung zur Aufnahme einer Mischung (21), die zum Kochgefäß (20) hinzugefügt wird, um das Getränk zuzubereiten, in dem ein Kochvorgang durchgeführt wird;
eine Heizeinrichtung (42) zum Erhitzen des Kochgefäßes (20) während des Kochvorgangs; und
einen Infrarot-Temperatursensor (50) zum kontaktlosen Erfassen der Temperatur im Kochgefäß (20);
**dadurch gekennzeichnet, dass** der Infrarot-Temperatursensor (50) konfiguriert ist, die Temperatur einer Oberfläche (23) der Mischung (21) während des Kochvorgangs festzustellen, und der Infrarot-Temperatursensor (50) in der Nähe des Kochgefäßes in einem solchen Abstand angeordnet ist, dass die kontaktlose Messung der Temperatur der Oberfläche (23) der Mischung (21) ermöglicht wird, wobei die elektronische Steuereinheit an die Heizeinrichtung (42) übertragene Leistung reduziert oder abschaltet, wenn ein vorbestimmter Temperaturwert erreicht ist, basierend auf dem vom Infrarot-Temperatursensor (50) erhaltenen Temperaturwert.

2. Getränkevorrichtung (10) nach Anspruch 1, wobei die elektronische Schaltung konfiguriert ist, den Kochvorgang durch Abschalten oder Reduzieren der Energieübertragung zum Kochgefäß (20) auszusetzen, wenn die Mischung (21) eine vorbestimmte Temperatur erreicht, wobei das Kochgefäß (20) für einen vordefinierten Zeitraum auf 30 bis 100°C gehalten wird.

3. Getränkevorrichtung (10) nach einem der vorhergehenden Ansprüche, wobei die Vorrichtung einen Wassertank (30) zum Speichern von Wasser und eine Pumpe (32) aufweist, die geeignet ist, das Wasser (31) im Wassertank (30) zum Kochgefäß (20) zu überführen.

4. Getränkevorrichtung (10) nach einem der vorhergehenden Ansprüche, wobei die Getränkevorrichtung (10) mindestens einen Sprühkopf (60) aufweist, der das Mischen der Mischung (21) im Kochgefäß (20) mittels eines Wasserstrahls (61) ermöglicht.

5. Getränkevorrichtung (10) nach Anspruch 4, wobei der Sprühkopf (60) mindestens eine Sprühöffnung (63) aufweist, durch die der Wasserstrahl geht, wobei die mindestens eine Sprühöffnung (63) konfiguriert ist, das Wasser zur Mischung in einem Winkel (α) zwischen 10 und 60 Grad bezüglich einer Längsachse (X) der Vorrichtung (10) vor oder während des Kochvorgangs zu sprühen.

6. Getränkevorrichtung (10) nach einem der vorhergehenden Ansprüche, wobei die Getränkevorrichtung (10) einen Temperatursensor aufweist, der eingerichtet ist, um die Temperatur der Bodenfläche der Heizeinrichtung (42) zu messen und zu steuern, wodurch ein Überhitzen der Heizeinrichtung (42) verhindert wird.

7. Getränkevorrichtung (10) nach einem der vorhergehenden Ansprüche, wobei die Getränkevorrichtung (10) einen Rührer (44), der geeignet ist, im Kochgefäß (20) positioniert zu werden, und eine Antriebseinrichtung (41) aufweist, die konfiguriert ist, den Rührer (44) zu betätigen, wobei die Antriebseinrichtung (41) und der Rührer (44) so konfiguriert sind, dass der Rührer (44) angetrieben wird, um die Mischung im Kochgefäß (20) durch eine Magnetantriebswirkung zu mischen.

8. Getränkevorrichtung (10) nach Anspruch 7, wobei die elektronische Steuereinheit so konfiguriert ist, dass sie die Antriebseinrichtung (41) betätigt und dadurch den Rührer (44) mit einer Geschwindigkeit magnetisch antreibt, um die Mischung (21) während des Kochvorgangs oder vor dem Kochvorgang in einem spezifischen Zeitraum zu mischen.

9. Getränkevorrichtung (10) nach Anspruch 7 oder 8, wobei die Antriebseinrichtung (41) einen Antriebsabschnitt (43) in magnetischer Verbindung mit dem Rührer (44) und einen Motor (40) aufweist, der elektrisch betrieben wird, wobei eine Spindel des Motors (40) den Antriebsabschnitt (43) in Drehung antreibt und dies ein rotierendes lokales Magnetfeld erzeugt, das mit einem eingebetteten oberen Magneten (44a) des Rührers (44) und einem eingebetteten unteren Magneten (43a) des Antriebsabschnitts (43) zusammenwirkt, und dies dazu führt, dass der Rührer rotiert.

10. Getränkevorrichtung (10) nach einem der vorhergehenden Ansprüche, wobei die Getränkevorrichtung (10) einen Schalter aufweist, der konfiguriert ist, das Platzieren des Kochgefäßes (20) in der Vorrichtung vor dem Start des Kochvorgangs festzustellen.

11. Getränkevorrichtung (10) nach einem der vorhergehenden Ansprüche, wobei die Getränkevorrichtung (10) eine Hebeeinrichtung (70) aufweist, die es ermöglicht, die Heizeinrichtung (42) so anzuheben, dass sie das Kochgefäß (20) berührt, um die Wärmeleistung während des Kochvorgangs zu erhöhen, wobei die Hebeeinrichtung (70) die Heizeinrichtung (42) in Abwärtsrichtung betätigt, wenn der Kochvorgang abgeschlossen ist.

12. Getränkevorrichtung (10) nach einem der Ansprüche 1 bis 11, wobei die elektronische Steuereinheit einen Temperaturalgorithmus hat, der den inneren Temperaturwert der Mischung (12) und wann die Mischung (12) während des Kochvorgangs siedet, bezüglich der vom Infrarot-Temperatursensor (50) erfassten Temperatur der Oberfläche (23) der Mischung (12) berechnet, wobei der die innere Temperatur der Mischung (21) berechnende Temperaturalgorithmus von der Art des zuzubereitenden Getränks und der Art der Heizeinrichtung (42) abhängt.

13. Getränkevorrichtung (10) nach einem der Ansprüche 1 bis 10, wobei der Infrarot-Temperatursensor (50) im Kochgefäß (20) für ein kontaktloses Erfassen der Temperatur im Kochgefäß (20) angeordnet ist, und die Heizeinrichtung (42) auf einem Bodenabschnitt des Kochgefäßes (20) angeordnet ist, wobei das Kochgefäß (20) während des Kochvorgangs auf einem Ständer (80) platziert ist.

14. Zubereitungsverfahren für ein Getränk, insbesondere ein Getränk auf der Basis von Kaffee, für eine wie in den vorhergehenden Ansprüchen definierte Getränkevorrichtung (10), aufweisend:
einen Schritt des Hinzufügens von Bestandteilen der Mischung in das Kochgefäß (20) zur Zubereitung des Getränks;
einen Schritt des Platzierens des Kochgefäßes (20) in der Getränkevorrichtung (10);
einen Schritt des Betätigens der Vorrichtung (10);
einen Schritt des Sprühens von Wasser in das Kochgefäß (20);
einen Schritt des Auslösens des Kochvorgangs durch Übertragen von Energie an die Heizeinrichtung (42);
einen Schritt des Messens der Temperatur der Oberfläche (23) der Mischung (21) im Kochgefäß (20) mittels des kontaktlosen Infrarot-Temperatursensors (50);
einen Schritt des Beendens des Kochvorgangs durch Abschalten der von der Heizeinrichtung (42) an das Kochgefäß (20) übertragenen Energie, wenn ein vordefinierter Temperaturwert basierend auf den vom Infrarot-Temperatursensor (50) erhaltenen Temperaturdaten erreicht wird.

15. Verfahren nach Anspruch 14, das weiter aufweist:
einen Schritt, während dessen die Temperatur zwischen 30 und 100°C für einen Zeitraum aufrechterhalten wird, der von der Art des zuzubereitenden Getränks abhängt; und
einen Schritt des Beendens des Kochvorgangs durch Abschalten der von der Heizeinrichtung (42) an das Kochgefäß (20) übertragenen Energie, bevor die Temperatur der Mischung (21) 100°C übersteigt.

## Revendications

1. Dispositif de boisson (10) pour fabriquer une boisson, en particulier une boisson à base de café, comprenant :
une unité de commande électronique ;
un récipient de cuisson portable (20) ayant un fond et une partie supérieure ouverte pour recevoir un mélange (21) qui est ajouté au récipient de cuisson (20) pour fabriquer la boisson, dans lequel un traitement de cuisson est effectué ;
un moyen de chauffage (42) pour chauffer le récipient de cuisson (20) pendant le traitement de cuisson ; et
un capteur de température infrarouge (50) pour détecter sans contact la température dans le récipient de cuisson (20) ;
**caractérisé par le fait que** ledit capteur de température infrarouge (50) est configuré pour détecter la température d'une surface supérieure (23) du mélange (21) pendant le traitement de cuisson et ledit capteur de température infrarouge (50) est disposé à proximité du récipient de cuisson à une distance qui autorise la mesure de la température de la surface supérieure (23) du mélange (21) sans contact, ladite unité de commande électronique réduisant ou coupant l'énergie transférée audit moyen de chauffage (42) lorsqu'une valeur de température prédéfinie est atteinte sur la base de la valeur de température obtenue par le capteur de température infrarouge (50).

2. Dispositif de boisson (10) selon la revendication 1, dans lequel ledit circuit électronique est configuré pour mettre le traitement de cuisson sur pause par coupure ou réduction de la transmission d'énergie au récipient de cuisson (20) lorsque le mélange (21) atteint une température prédéterminée, le récipient de cuisson (20) étant maintenu entre 30 et 100°C pendant une durée prédéfinie.

3. Dispositif de boisson (10) selon l'une quelconque des revendications précédentes, dans lequel ledit dispositif comprend un réservoir d'eau (30) pour stocker de l'eau et une pompe (32) qui est apte à transférer l'eau (31) dans le réservoir d'eau (30) au récipient de cuisson (20).

4. Dispositif de boisson (10) selon l'une quelconque des revendications précédentes, dans lequel ledit dispositif de boisson (10) comprend au moins une tête de pulvérisation (60) qui permet le mélange du mélange (21) dans le récipient de cuisson (20) au moyen d'un jet d'eau (61).

5. Dispositif de boisson (10) selon la revendication 4, dans lequel ladite tête de pulvérisation (60) comprend au moins une ouverture de pulvérisation (63) à travers laquelle passe le jet d'eau, ladite au moins une ouverture de pulvérisation (63) étant configurée pour pulvériser l'eau sur le mélange à un angle (α) entre 10 et 60 degrés par rapport à un axe longitudinal (X) du dispositif (10) avant ou pendant le traitement de cuisson.

6. Dispositif de boisson (10) selon l'une quelconque des revendications précédentes, dans lequel ledit dispositif de boisson (10) comprend un capteur de température qui est agencé pour mesurer et réguler la température de la surface inférieure du moyen de chauffage (42), la surchauffe du moyen de chauffage (42) étant ainsi éliminée.

7. Dispositif de boisson (10) selon l'une quelconque des revendications précédentes, dans lequel ledit dispositif de boisson (10) comprend un agitateur (44) qui est apte à être positionné dans le récipient de cuisson (20), et un moyen d'entraînement (41) configuré pour actionner l'agitateur (44), ledit moyen d'entraînement (41) et l'agitateur (44) étant configurés de telle sorte que l'agitateur (44) est entraîné afin de mélanger le mélange dans le récipient de cuisson (20), par l'intermédiaire d'un effet d'entraînement magnétique.

8. Dispositif de boisson (10) selon la revendication 7, dans lequel l'unité de commande électronique est configurée de manière à actionner ledit moyen d'entraînement (41) et par conséquent entraîner magnétiquement ledit agitateur (44) à une vitesse pour mélanger le mélange (21) pendant le traitement de cuisson ou avant le traitement de cuisson pendant une durée spécifiée.

9. Dispositif de boisson (10) selon la revendications 7 ou 8, dans lequel ledit moyen d'entraînement (41) comprend une partie d'entraînement (43) en communication magnétique avec l'agitateur (44) et un moteur (40) qui est alimenté électriquement, un axe du moteur (40) entraîne la partie d'entraînement (43) en rotation et ceci crée un champ magnétique local rotatif, collaborant avec un aimant supérieur intégré (44a) de l'agitateur (44) et un aimant inférieur intégré (43a) de la partie d'entraînement (43) et ceci, par conséquent, amène l'agitateur à tourner.

10. Dispositif de boisson (10) selon l'une quelconque des revendications précédentes, dans lequel ledit dispositif de boisson (10) comprend un commutateur qui est configuré pour détecter la mise en place du récipient de cuisson (20) dans le dispositif avant que le traitement de cuisson ne commence.

11. Dispositif de boisson (10) selon l'une quelconque des revendications précédentes, dans lequel ledit dispositif de boisson (10) comprend un moyen de levage (70) qui autorise le moyen de chauffage (42) d'être levé de façon à entrer en contact avec le récipient de cuisson (20) pour augmenter l'efficacité thermique pendant le traitement de cuisson, ledit moyen de levage (70) actionnant le moyen de chauffage (42) dans une direction descendante lorsque le traitement de cuisson est terminé.

12. Dispositif de boisson (10) selon l'une quelconque des revendications 1 à 11, dans lequel le circuit de commande électronique a un algorithme de température qui calcule une valeur de température interne du mélange (12) et le moment où le mélange (12) sera en ébullition pendant le traitement de cuisson, par rapport à la température de la surface supérieure (23) du mélange (12) qui est détectée par le capteur de température infrarouge (50), l'algorithme de température calculant la température interne du mélange (21) en fonction du type de la boisson devant être préparée et du type du moyen de chauffage (42).

13. Dispositif de boisson (10) selon l'une quelconque des revendications 1 à 10, dans lequel ledit capteur de température infrarouge (50) est disposé dans le récipient de cuisson (20) pour détecter sans contact la température dans le récipient de cuisson (20) et ledit moyen de chauffage (42) est disposé sur une partie inférieure du récipient de cuisson (20), ledit récipient de cuisson (20) étant placé sur un socle (80) pendant le traitement de cuisson.

14. Procédé de préparation de boisson, en particulier d'une boisson à base de café, pour un dispositif de boisson (10) selon l'une quelconque des revendications précédentes, comprenant :
une étape d'ajout d'ingrédients du mélange au récipient de cuisson (20) pour fabriquer la boisson ;
une étape de mise en place du récipient de cuisson (20) dans le dispositif de boisson (10) ;
une étape d'actionnement du dispositif (10) ;
une étape de pulvérisation d'eau dans le récipient de cuisson (20) ;
une étape d'actionnement du traitement de cuisson par transmission d'énergie au moyen de chauffage (42) ;
une étape de mesure sans contact de la température de la surface supérieure (23) du mélange (21) dans le récipient de cuisson (20) au moyen du capteur de température infrarouge (50) ;
une étape d'achèvement du traitement de cuisson par coupure de l'énergie transmise par le moyen de chauffage (42) au récipient de cuisson (20) lorsqu'une valeur de température prédéfinie est atteinte sur la base des données de température obtenues par le capteur de température infrarouge (50).

15. Procédé selon la revendication 14, comprenant en outre :
une étape pendant laquelle la température entre 30 et 100°C est maintenue pendant une durée dépendant du type de la boisson devant être préparée ; et
une étape d'achèvement du traitement de cuisson par coupure de l'énergie transmise par le moyen de chauffage (42) au récipient de cuisson (20) avant que la température du mélange (21) ne dépasse 100°C.
